# FASCICULE DE BREVET EUROPEEN

(11) **EP 1 022 213 B1**
(45) Date de publication et mention de la délivrance du brevet: **06.10.2004**
(21) Numéro de dépôt: 00400104.6
(22) Date de dépôt: 17.01.2000
(51) Int. Cl.: B62M 3/08

(54) **Pédale automatique de cycle**
Automatisches Pedal für Fahrrad
Automatic pedal for bicycle

(30) Priorité: 22.01.1999 FR 9900722
(43) Date de publication de la demande: 26.07.2000
(73) Titulaire: Look Cycle International, 58000 Nevers (FR)
(72) Inventeur: Peyre, Henri, 58270 Saint Benin D'Azy (FR)
(74) Mandataire: Boutin, Antoine

(56) Documents cités:
- FR-A- 2 695 902
- GB-A- 2 202 499
- US-A- 5 497 680

## Description

La présente invention concerne un dispositif de fixation d'une chaussure sur une pédale automatique selon le préambule de la revendication 1 pouvant être utilisée aussi bien sur un cycle de route que sur un cycle dit tout terrain.

Elle concerne également un élément d'accrochage selon le préambule de la revendication 7, pouvant être fixé sous une chaussure de cycliste et destiné à coopérer avec des organes d'enclenchement disposés sur la pédale.

On connaît des pédales automatiques de cycle de ce genre, comportant un organe d'enclenchement avant constitué par une griffe formant butée pour enclencher l'extrémité avant mâle d'un élément d'accrochage sous forme d'une plaque généralement encastrée dans la semelle d'une chaussure de cycliste, et un organe d'enclenchement arrière mâle constitué par une griffe mobile pour enclencher une extrémité arrière femelle de l'élément d'accrochage.

Sur les pédales connues de ce genre, une conformation mâle à l'extrémité avant de la plaque d'accrochage est ainsi reçue dans une conformation femelle de l'organe d'enclenchement avant de la pédale. Deux organes de guidage sous forme de pattes s'étendant essentiellement perpendiculairement à une surface de réception de la plaque d'accrochage sur la pédale sont disposés de part et d'autre de l'organe d'enclenchement avant en formant un V pour guider la conformation mâle de la plaque d'accrochage lors de la mise en place de celle-ci dans une position de pré-enclenchement contre les organes d'enclenchement avant et arrière de la pédale.

La griffe arrière est montée pivotante sur un axe et elle est précontrainte par un moyen élastique vers une position d'enclenchement tout en étant déplaçable sous la pression de la chaussure de cycliste entre une position ouverte d'écartement permettant l'insertion de la plaque d'accrochage entre les deux griffes et une position fermée d'enclenchement assurant la solidarisation de la cale avec la pédale automatique.

Le moyen élastique est généralement constitué par un ressort hélicoïdal et la griffe arrière peut être déplacée à force, contre l'effet de l'action du ressort, vers sa position ouverte pour dégager la plaque d'accrochage de sa prise entre les griffes. Ce déplacement de la griffe arrière est obtenu à l'aide de l'extrémité arrière de la plaque d'accrochage dont la conformation femelle présente des parois latérales obliques formant cames qui, lors d'une rotation de la chaussure vers l'extérieur, repousse la griffe vers l'arrière. Ce déplacement de la griffe arrière vers la position ouverte peut par ailleurs être obtenu de la même manière lors d'une rotation de la chaussure vers l'intérieur, par exemple si le cycliste fait une chute. La tension du ressort peut en général être réglée à l'aide d'une vis de réglage pour modifier l'effort nécessaire pour le dégagement de la chaussure.

Lors de la rotation de la chaussure, la conformation mâle à l'extrémité avant de la plaque d'accrochage vient ainsi latéralement contre l'un ou l'autre des deux organes de guidage, ce qui a pour résultat que le centre de rotation se trouve en retrait sur la plaque et que le bras de levier est nettement inférieur à la longueur de la cale.

On connaît du GB 2 202 499 une variante d'une telle pédale dans laquelle les organes de guidage sur la pédale sont associés à un ergot disposé au centre de la griffe avant et apte à coopérer avec une échancrure incurvée au centre de l'extrémité avant mâle de la plaque d'accrochage de sorte que le centre de rotation de celle-ci coïncide essentiellement avec l'axe de l'ergot de manière à obtenir un mouvement de rotation continu.

Un but de l'invention est de proposer une pédale qui permet de réduire le nombre de pièces en supprimant les organes de guidage et d'appui qui sont présents sur les pédales connues.

Un autre but de l'invention est de proposer une pédale automatique qui soit particulièrement simple et peu onéreuse à fabriquer tout en restant sure et fiable.

Encore un autre but de l'invention est de proposer une pédale pourvue d'un dispositif de réglage simplifié pour la modification de la tension du ressort qui détermine l'effort d'enclenchement et de libération de la cale sur la pédale.

Un objet de l'invention est un dispositif de fixation d'une chaussure sur une pédale automatique de cycle, ledit dispositif comprenant un élément d'accrochage solidarisable à une semelle d'une chaussure de cycliste et une pédale comportant un organe d'enclenchement avant pour enclencher l'extrémité avant dudit élément d'accrochage solidaire de la semelle d'une chaussure de cycliste et un organe d'enclenchement arrière mobile mâle pour enclencher une extrémité arrière femelle dudit élément d'accrochage, ledit organe d'enclenchement arrière mobile étant précontraint par un moyen élastique vers une position d'enclenchement tout en étant déplaçable sous la pression de la chaussure de cycliste, contre l'effet de l'action du moyen élastique, entre une position ouverte d'écartement permettant l'insertion et le retrait de l'élément d'accrochage entre les deux organes d'enclenchement et une position fermée d'enclenchement assurant la solidarisation de l'élément d'accrochage avec la pédale automatique, caractérisée en ce que l'extrémité avant de l'élément d'accrochage présente une conformation femelle obtenue par un évidement destiné à recevoir une conformation mâle formée par l'extrémité de l'organe d'enclenchement avant de la pédale automatique, de manière que les extrémités femelles avant et arrière dudit élément d'accrochage soient prises en tenaille entre les organes mâles d'enclenchement avant et arrière de la pédale automatique, et en ce que l'extrémité avant femelle dudit élément d'accrochage présente deux joues frontales de guidage disposées de part et d'autre de la configuration femelle et aptes à guider l'organe mâle d'enclenchement avant vers cette configuration femelle.

Selon d'autres caractéristiques de l'invention :
- les dimensions latérales des organes d'enclenchement arrière et avant sont inférieures à celles des conformations femelle de l'élément d'accrochage de manière à permettre un certain débattement latéral de celui-ci ;
- l'organe d'enclenchement arrière est précontraint vers l'avant par un moyen élastique réglable et le moyen élastique réglable comporte au moins un ressort hélicoïdal prenant appui sur un excentrique porté par une tige de réglage permettant de régler la tension dudit ressort hélicoïdal par rotation de la tige ;
- l'excentrique est réalisé par un évidement partiel de la tige de réglage ;
- le corps de la pédale automatique est réalisé en matériau synthétique non métallique ;
- la pédale est une pédale réversible comportant deux faces d'enclenchement.

Un autre objet de l'invention est un élément d'accrochage d'une chaussure sur une pédale automatique de cycle, constituant une pièce monobloc apte à être fixée sous la chaussure, du type comportant une extrémité avant et une extrémité arrière destinées à coopérer respectivement avec un organe d'enclenchement avant de pédale automatique de cycle pour enclencher l'extrémité avant de l'élément d'accrochage fixée sous la chaussure et un organe d'enclenchement mobile arrière de pédale automatique de cycle pour enclencher l'extrémité arrière dudit élément, caractérisé en ce que les extrémités avant et arrière dudit élément sont des extrémités à configuration femelle aptes à êtres prises en tenaille entre les organes mâles d'enclenchement avant et arrière d'une pédale automatique, l'extrémité avant femelle dudit élément d'accrochage présentant deux joues frontales de guidage disposées de part et d'autre de la configuration femelle et aptes à guider l'organe mâle d'enclenchement avant vers cette configuration femelle.

Selon une autre caractéristique de l'invention :
- l'extrémité avant femelle dudit élément d'accrochage présente un décrochement frontal apte à être engagé sous l'organe mâle d'enclenchement avant d'une pédale automatique.

D'autres caractéristiques et avantages de l'invention ressortiront de la description donnée à titre d'exemple non limitatif d'un mode de réalisation de l'invention en référence aux dessins annexés. Sur ces dessins :
- la figure 1 est une vue en coupe suivant la ligne A-A de la figure 2 d'une pédale réversible selon l'invention ;
- la figure 2 est une vue en coupe suivant la ligne B-B de la figure 1 ;
- la figure 3 est une vue de dessus de la cale formant élément d'accrochage selon l'invention ;
- la figure 4 est une vue en coupe de la cale suivant la ligne C-C de la figure 3 ;
- la figure 5 est une vue latérale de la pédale selon l'invention ;
- la figure 6 est une vue de dessus de la pédale ; cette vue correspondant à une vue de dessous de cette même pédale du fait qu'elle est réversible ;
- les figures 7 à 9 sont des vues différentes d'un levier portant les organes d'enclenchement avant et arrière ;
- la figure 10 montre deux ressorts hélicoïdaux destinés à coopérer avec l'axe à excentrique des figures 12 et 13 ;
- la figure 11 est une variante avec un seul ressort comportant une boucle médiane,
- la figure 12 montre un axe pourvu d'un excentrique selon l'invention ;
- la figure 13 montre l'axe de la figure 12 tourné de 90°.

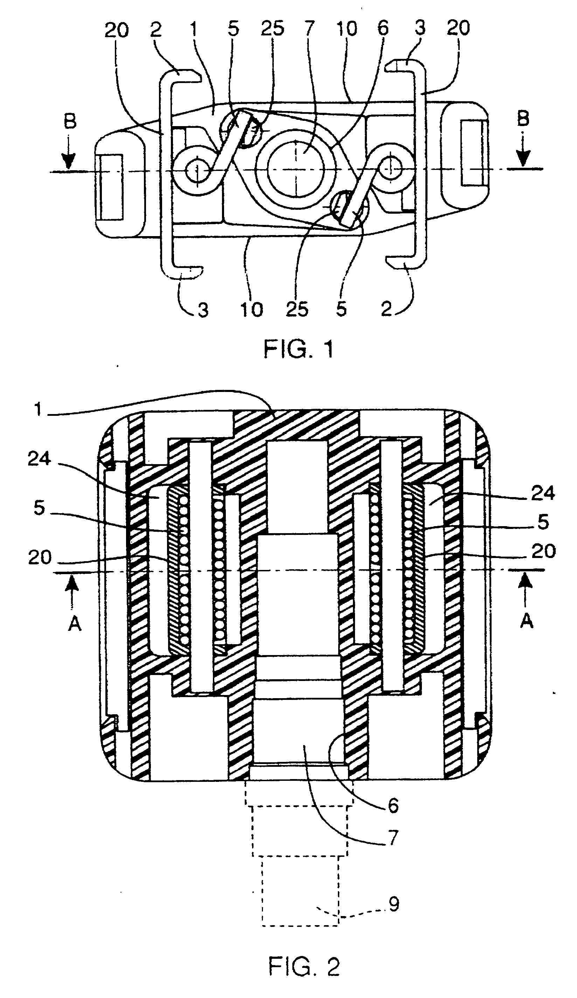

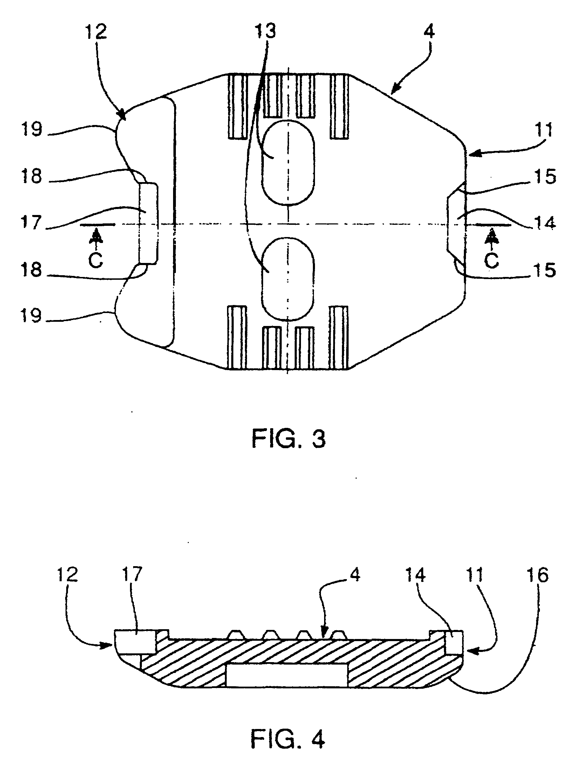

Les figures 1 et 2 montrent un mode de réalisation de la pédale automatique selon l'invention. Dans l'exemple illustré, cette pédale est réversible, c'est-à-dire qu'elle comporte deux faces d'enclenchement. Cette pédale comporte un corps de pédale 1 portant un organe d'enclenchement avant 2 et un organe d'enclenchement arrière 3 qui sont selon l'invention tous les deux des organes mâles destinés à coopérer avec des conformations femelles sur une plaque d'accrochage 4 qui sera décrite en détail en référence aux figures 3 et 4.

L'organe d'enclenchement arrière 3 est de manière connue en soi déplaçable entre une position ouverte d'écartement permettant l'insertion et le retrait de la plaque d'accrochage 4, et une position fermée d'enclenchement assurant la solidarisation de la plaque d'accrochage avec la pédale. L'organe d'enclenchement arrière est constamment sollicité vers la position fermée d'enclenchement par un moyen élastique constitué par au moins un ressort hélicoïdal 5. La tension de ce ressort peut être modifiée à l'aide d'un dispositif de réglage selon l'invention qui sera décrit ci-dessous en détail.

Le corps de pédale 1 est pourvu d'un trou médian latéral 6 dans lequel l'axe de pédale 7 est logé. L'extrémité libre 9 de cet axe de pédale qui fait saillie en dehors du corps de pédale 1 est filetée pour le montage ultérieur de la pédale sur le pédalier d'un cycle.

Les deux faces d'enclenchement 10 se trouvent opposées sur le corps de pédale 1 qui avantageusement peut être fabriqué en un matériau synthétique non métallique, par exemple en Delrin® (marque de la société de droit américain DUPONT DE NEMOURS) ou matériau analogue. Pour faciliter la fabrication, le corps de pédale est de préférence moulé en une seule pièce dans lequel un trou taraudé de réception de l'axe de pédale peut être obtenu directement du moulage.

La plaque d'accrochage 4 illustrée sur les figures 3 et 4 peut être obtenue par estampage ou par frittage.

Cette plaque d'accrochage 4 comporte une extrémité arrière 11 et une extrémité avant 12 destinées à coopérer respectivement avec l'organe d'enclenchement arrière 3 et l'organe d'enclenchement avant de la pédale. La plaque comporte en outre deux trous de fixation oblongs 13 pour la fixation encastrée de la plaque dans la semelle d'une chaussure de cycliste. Bien entendu, ces deux trous oblongs peuvent être remplacés par une fente unique.

L'extrémité arrière 11 a de manière classique une conformation femelle obtenue par un évidement 14 qui lorsque la plaque d'accrochage est fixée contre la semelle d'une chaussure de cycliste forme une cavité de réception de l'extrémité de l'organe d'enclenchement arrière 3. Les parois latérales 15 de cet évidement forment entre elles un angle obtus dont le sommet est dirigé vers l'avant. Ces parois obliques constituent des cames coopérant avec des faces externes de l'extrémité de l'organe d'enclenchement, ces faces formant sensiblement le même angle obtus que celui des parois latérales 15 de l'évidement.

L'organe d'enclenchement peut ainsi être repoussé vers sa position ouverte d'écartement lorsque le pied du cycliste pivote vers l'extérieur ou vers l'intérieur. De préférence, un certain jeu existe entre les parois obliques de l'évidement 14 et les faces externes en contact sur l'organe d'enclenchement arrière 3 de sorte qu'un léger débattement latéral de la plaque soit possible.

De manière analogue, la plaque d'accrochage 4 comporte sur sa partie inférieure arrière une face d'extrémité oblique éventuellement légèrement arrondie constituant une came pour repousser l'organe d'enclenchement vers sa position ouverte, lorsque pour introduire la plaque entre les organes d'enclenchement, une pression est exercée sur la plaque dans une direction perpendiculaire à la face d'enclenchement 10 concernée.

Selon l'invention, l'extrémité avant de la plaque d'accrochage 4 présente une conformation femelle obtenue par un évidement 17 qui lorsque la plaque d'accrochage est fixée contre la semelle d'une chaussure de cycliste forme une cavité de réception de l'extrémité de l'organe d'enclenchement avant 2 qui est immobile. L'extrémité avant femelle présente un décrochement frontal apte à être engagé sous l'organe mâle d'enclenchement avant 2 de la pédale. Les parois latérales 18 de cet évidement sont sensiblement parallèles l'une à l'autre, mais peuvent éventuellement diverger légèrement vers l'extérieur.

Des joues frontales 19 sont disposées de part et d'autre de l'évidement 17 pour servir de cames de guidage pour guider l'extrémité de l'organe d'enclenchement avant 2 de la pédale vers la conformation femelle de la plaque d'accrochage lors de la mise en place de celle-ci sur la face d'enclenchement 10 concernée.

La largeur de l'extrémité de l'organe d'enclenchement avant 2 de la pédale est légèrement inférieure à celle de l'évidement 17 formant la conformation femelle avant, de sorte qu'un léger jeu soit créé pour permettre un certain débattement latéral de la plaque d'accrochage 4.

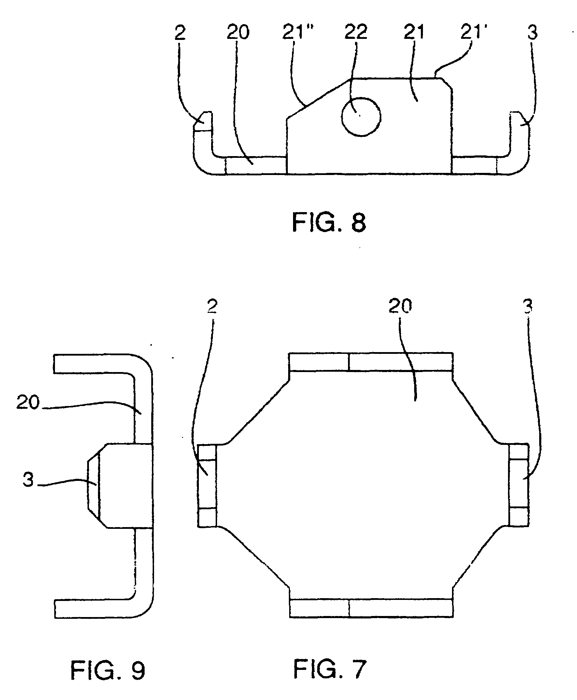

Comme déjà mentionné, la pédale est dans l'exemple illustré une pédale réversible et il comporte avantageusement deux leviers 20 métalliques (voir figures 8 à 9), dont chacun porte un organe d'enclenchement avant 2 et un organe d'enclenchement arrière 3, ces organes d'enclenchement étant constitués par des saillies repliées d'à peu près 90° par rapport au plan du levier.

Sur ses côtés latéraux, chaque levier 20 comporte des parties repliées dans le même sens que les organes d'enclenchement 2, 3 de manière à former des pattes opposées 21, chaque patte étant pourvue d'un trou 22 recevant un axe de rotation 23 (voir figure 2) du levier 20.

Ces leviers 20 s'étendent parallèlement à l'axe de pédale 7 à travers des lumières oblongues transversales 24 effectuées dans le corps de pédale de sorte que les organes d'enclenchement fassent saillie de part et d'autre de celui-ci sur chaque face d'enclenchement 10. Chaque levier 20 est monté pivotant sur un axe de rotation respective 23 et est précontraint vers la position de rapprochement et de fermeture des organes d'enclenchements avant et arrière 2, 3 par un ressort hélicoïdal 5 qui est enfilé sur l'axe de rotation 23 et qui d'un côté prend appui contre le levier 20 et de l'autre côté contre un point fixe sur le corps de pédale.

Dans cette position de fermeture, le rebord externe 21' chaque patte 21 du levier 20 se trouve en butée contre le corps de pédale. Le coin 21'' de ce rebord du côté de l'organe de déclenchement avant est découpé pour permettre une rotation limitée du levier vers la position d'écartement des organes d'enclenchement l'un de l'autre.

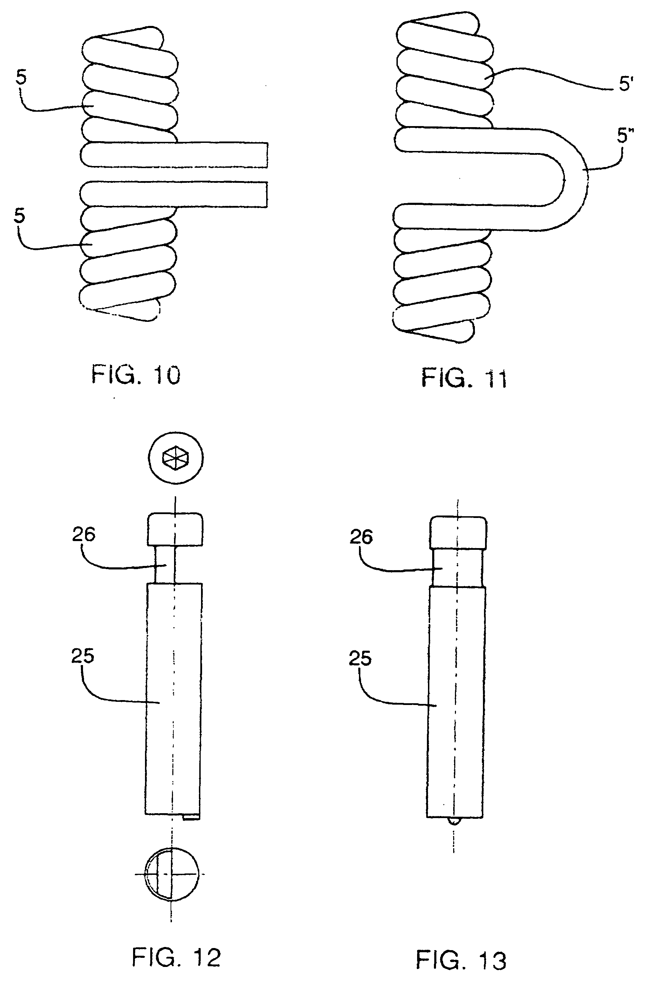

La pédale est pourvue d'un dispositif de réglage de la tension dans le ressort 5. Ce dispositif de réglage comporte une tige de réglage cylindrique 25 (voir figures 12, 13, 1) noyée dans le matériau du corps de pédale 1 et s'étendant parallèlement à l'axe de rotation 23, entre celui-ci et l'axe de pédale 7. La tige est selon l'invention pourvue d'un excentrique 26 sur lequel le ressort 5 prend appui, à travers une ouverture 27 ménagée dans le corps de pédale 1, du côté de la lumière oblongue 24. L'excentrique 26 est réalisé par un évidement partiel formant un méplat sur la tige de réglage 25. L'une des extrémités de la tige de réglage est accessible de l'extérieur du corps de pédale par un trou effectué dans celui-ci et cette extrémité est pourvue d'un évidement central à six pans creux destiné à recevoir une clé permettant de faire tourner la tige de quelques degrés afin de régler la tension dans le ressort 5.

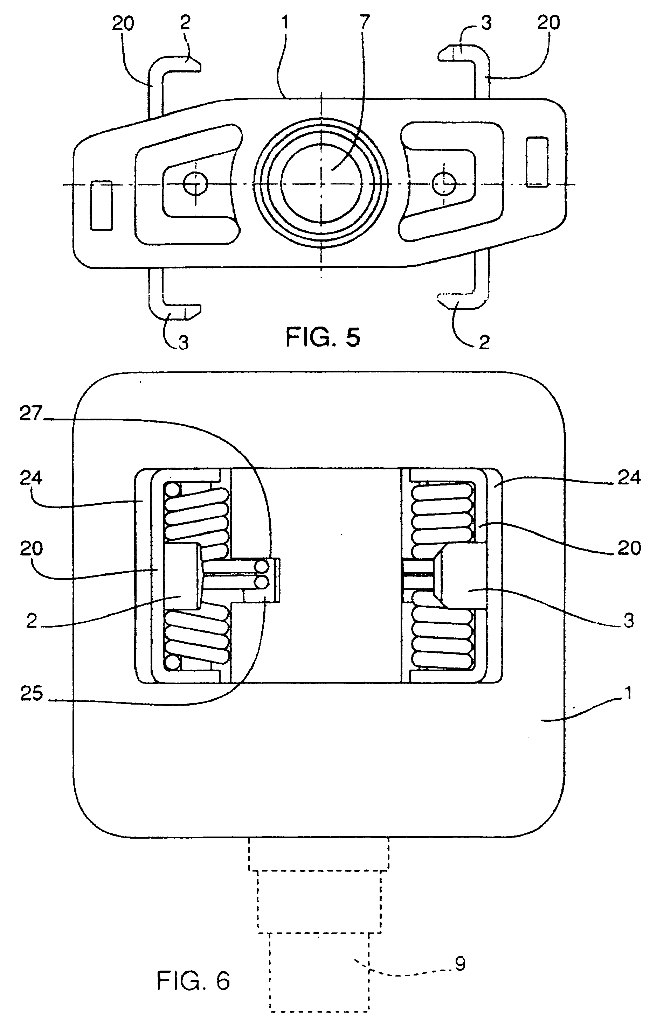

Dans l'exemple illustré sur les figures 2 et 6, deux ressorts 5 tels que ceux illustrés sur la figure 10 sont enfilés sur chaque axe de rotation du levier 20, leurs extrémités étant juxtaposées pour reposer ensemble dans l'évidement 26 formant excentrique.

Selon la variante illustrée à la figure 11, un seul ressort hélicoïdal 5' est utilisé. Ce ressort 5' est dans sa partie centrale pourvue d'une boucle 5'' destinée à être disposée dans l'évidement 26 formant excentrique de la tige de réglage 25.

Est ainsi obtenue une pédale particulièrement simple à fabriquer, très fiable et dont la tension des ressorts est particulièrement simple à régler. Elle permet aussi un certain débattement latéral de la plaquette, alors que le point de pivotement de la plaque d'accrochage est par rapport à ce qui est le cas dans les dispositifs connus déplacé vers l'avant pour obtenir un bras de levier plus long, ce qui permet l'utilisation de pièces de moindre dureté.

## Revendications

1. Dispositif de fixation d'une chaussure sur une pédale automatique de cycle, ledit dispositif comprenant un élément d'accrochage (4) solidarisable à une semelle d'une chaussure de cycliste et une pédale comportant un organe d'enclenchement avant (2) pour enclencher l'extrémité avant (12) dudit élément d'accrochage (4) et un organe d'enclenchement arrière mobile mâle (3) pour enclencher une extrémité arrière femelle (11) dudit élément d'accrochage (4), ledit organe d'enclenchement arrière mobile (3) étant précontraint par un moyen élastique (5) vers une position d'enclenchement tout en étant déplaçable sous la pression de la chaussure de cycliste, contre l'effet de l'action du moyen élastique, entre une position ouverte d'écartement permettant l'insertion et le retrait de l'élément d'accrochage (4) entre les deux organes d'enclenchement (2, 3) et une position fermée d'enclenchement assurant la solidarisation de l'élément d'accrochage (4) avec la pédale automatique, l'extrémité avant (12) de l'élément d'accrochage (4) présentant une conformation femelle obtenue par un évidement (17) destiné à recevoir une conformation mâle formée par l'extrémité de l'organe d'enclenchement avant (2) de la pédale automatique, **caractérisé en ce que** les extrémités femelles avant et arrière (11, 12) dudit élément d'accrochage (4) sont prises en tenaille entre les organes mâles d'enclenchement avant et arrière (2, 3) de la pédale automatique, et **en ce que** l'extrémité avant femelle (12) dudit élément d'accrochage (4) présente deux joues frontales de guidage (19) disposées de part et d'autre de la configuration femelle (17) et aptes à guider l'organe mâle d'enclenchement avant (2) vers cette configuration femelle.

2. Dispositif de fixation selon 1a revendication 1, **caractérisé en ce que** les dimensions latérales des organes d'enclenchement arrière et avant (2, 3) sont inférieures à celles des conformations femelle (14, 17) de l'élément d'accrochage (4) de manière à permettre un certain débattement latéral de celui-ci.

3. Dispositif de fixation selon la revendication 1 ou 2, dans lequel l'organe d'enclenchement arrière (3) est précontraint vers l'avant par un moyen élastique réglable (5), **caractérisé en ce que** le moyen élastique réglable comporte au moins un ressort hélicoïdal (5, 5') prenant appui sur un excentrique (26) porté par une tige de réglage (25) permettant de régler la tension dudit ressort hélicoïdal (5) par rotation de la tige.

4. Dispositif de fixation selon la revendication 3, **caractérisé en ce que** l'excentrique (26) est réalisé par un évidement partiel de la tige de réglage (25).

5. Dispositif de fixation selon l'une quelconque des revendications précédentes, **caractérisé en ce que** le corps (1) de la pédale automatique est réalisé en matériau synthétique non métallique.

6. Dispositif de fixation selon l'une quelconque des revendications précédentes, **caractérisé en ce que** la pédale est une pédale réversible comportant deux faces d'enclenchement (10).

7. Elément d'accrochage d'une chaussure sur une pédale automatique de cycle, constituant une pièce monobloc apte à être fixée sous la chaussure, du type comportant une extrémité avant (12) et une extrémité arrière (11) destinées à coopérer respectivement avec un organe d'enclenchement avant (2) de pédale automatique de cycle pour enclencher l'extrémité avant (12) de l'élément d'accrochage (4) fixée sous la chaussure et un organe d'enclenchement mobile arrière (3) de pédale automatique de cycle pour enclencher l'extrémité arrière (11) dudit élément, **caractérisé en ce que** les extrémités avant et arrière (12, 11) dudit élément sont des extrémités à configuration femelle aptes à êtres prises en tenaille entre les organes mâles d'enclenchement avant et arrière (2, 3) d'une pédale automatique, l'extrémité avant femelle (12) dudit élément d'accrochage présentant deux joues frontales de guidage (19) disposées de part et d'autre de la configuration femelle (17) et aptes à guider l'organe mâle d'enclenchement avant (2) de pédale automatique vers cette configuration femelle.

8. Elément d'accrochage selon la revendication 7 , **caractérisé en ce que** l'extrémité avant femelle (12) dudit élément d'accrochage (4) présente un décrochement frontal apte à être engagé sous l'organe mâle d'enclenchement avant (2) d'une pédale automatique.

## Patentansprüche

1. Vorrichtung zur Befestigung eines Schuhs an einem automatischen Fahrradpedal, wobei die Vorrichtung aufweist:
ein Verhakungelement (4), das mit einer Sohle eines Radfahrerschuhs fest verbindbar ist,
und ein Pedal mit einem vorderen Verrastungsorgan (2) zum Verrasten des vorderen Endbereichs (12) des Verhakungelements (4) und einem beweglichen hinteren männlichen Verrastungsorgan (3) zum Verrasten eines weiblichen hinteren Endbereichs (11) des Verhakungelements (4),
wobei das bewegliche hintere Verrastungsorgan (3) von einem elastischen Mittel (5) in Richtung auf eine Verrastungsposition vorgespannt ist, dabei jedoch unter dem Druck des Radfahrerschuhs gegen die Wirkung des elastischen Mittels verschiebbar ist zwischen einer offenen Abstandsposition, die das Einführen und das Herausziehen des Verhakungelements (4) zwischen den beiden Verrastungsorganen (2, 3) ermöglicht, und einer geschlossenen Verrastungsposition, die die feste Verbindung des Verhakungelements (4) mit dem automatischen Pedal ermöglicht,
und wobei der vordere Endbereich (12) des Verhakungelements (4) eine weibliche Ausformung aufweist, die durch eine Vertiefung (17) erreicht wird, die zur Aufnahme einer von dem Endbereich des vorderen Verrastungsorgans (2) des automatischen Pedals gebildeten männlichen Ausformung bestimmt ist,
**dadurch gekennzeichnet,**
**daß** die vorderen und die hinteren weiblichen Endbereiche (11, 12) des Verhakungselements (4) zwischen den vorderen und den hinteren männlichen Verrastungsorganen (2, 3) des automatischen Pedals eingeklemmt werden,
und **daß** der vordere weibliche Endbereich (12) des Verhakungselements (4) zwei frontale Führungsanschläge (19) aufweist, die zu beiden Seiten der weiblichen Ausformung (17) angeordnet und geeignet sind, das vordere männliche Verrastungsorgan (2) in Richtung auf diese weibliche Ausformung zu führen.

2. Befestigungvorrichtung nach Anspruch 1, **dadurch gekennzeichnet, daß** die seitlichen Dimensionen des vorderen und des hinteren Verrastungsorgans (2, 3) kleiner sind als diejenigen der weiblichen Ausformungen (14, 17) des Verhakungselements (4), so daß sie diesem eine gewisse seitliche Auslenkung ermöglichen.

3. Befestigungvorrichtung nach Anspruch 1 oder 2, bei der das hintere Verrastungsorgan (3) durch ein verstellbares elastisches Mittel (5) vorgespannt ist, **dadurch gekennzeichnet, daß** das verstellbare elastische Mittel wenigstens eine Schraubenfeder (5, 5') umfaßt, die sich an einem Exzenter (26) abstützt, der von einer Einstellstange (25) getragen wird, die die Einstellung der Spannung der Schraubenfeder (5) durch Drehen der Stange ermöglicht.

4. Befestigungvorrichtung nach Anspruch 3, **dadurch gekennzeichnet, daß** der Exzenter (26) durch eine partielle Aussparung der Einstellstange (25) realisiert ist.

5. Befestigungvorrichtung nach einem der vorhergehenden Ansprüche, **dadurch gekennzeichnet, daß** der Körper (1) des automatischen Pedals aus einem nichtmetallischen Kunststoff hergestellt ist.

6. Befestigungvorrichtung nach einem der vorhergehenden Ansprüche, **dadurch gekennzeichnet, daß** das Pedal ein zweiseitiges Pedal ist, das zwei Verrastungsseiten (10) aufweist:

7. Verhakungselement zum Verhaken eines Schuhs an einem automatischen Fahrradpedal, wobei das Element ein unter dem Schuh befestigbares Monoblockteil des Typs bildet, der einen vorderen Endbereich (12) und einen hinteren Endbereich (11) aufweist, die für das Zusammenwirken mit einem vorderen Verrastungsorgan (2) eines automatischen Fahrradpedals zum Verrasten des vorderen Endbereichs (12) des unter dem Schuh befestigten Verhakungselements (4) bzw. mit einem beweglichen hinteren Verrastungsorgan (3) des automatischen Fahrradpedals zum Verrasten des hinteren Endbereichs (11) des genannten Elements bestimmt sind,
**dadurch gekennzeichnet**,
- daß der vordere und der hintere Endbereich (11, 12) des genannten Element Endbereiche mit weibliche Ausformung sind, die zwischen dem vorderen und dem hinteren männlichen Verrastungsorgan (2, 3) eines automatischen Pedals eingeklemmt werden können, wobei der vordere weibliche Endbereich (12) des Verhakungselements zwei frontale Führungsanschläge (19) aufweist, die zu beiden Seiten der weiblichen Ausformung (17) angeordnet und geeignet sind, das vordere männliche Verrastungsorgan (2) in Richtung auf diese weibliche Ausformung zu führen.

8. Verhakungselement nach Anspruch 7, **dadurch gekennzeichnet, daß** der vordere weibliche Endbereich des Verhakungelements (4) einen frontalen Rücksprung aufweist, der unter dem vorderen männlichen Verrastungsorgan (2) eines automatischen Pedals zum Eingriff kommen kann.

## Claims

1. Device for fixing a shoe on an automatic cycle pedal, said device comprising a locking element (4) which can be secured to a sole of a cyclist's shoe and a pedal comprising a front engagement member (2) to engage the front end (12) of said locking element (4) and a rear movable male engagement member (3) to engage a rear female end (11) of said locking element (4), said rear movable engagement member (3) being prestressed by resilient means (5) towards an engagement position while being displaceable under the pressure of the cyclist's shoe, against the action of the resilient means, between an open spaced position permitting insertion and withdrawal of the locking element (4) between the two engagement members (2, 3) and a closed engagement position ensuring the securing of the locking element (4) to the automatic pedal, the front end (12) of the locking element (4) having a female configuration provided by a recess (17) adapted to receive a male configuration formed by the end of the front engagement member (2) of the automatic pedal, **characterised in that** the front and rear female ends (11, 12) of said locking element (4) are pinched between the front and rear male engagement members (2, 3) of the automatic pedal, and **in that** the front female end (12) of said locking element (4) has two front guide jaws (19) arranged on either side of the female configuration (17) and capable of guiding the front male engagement member (2) towards this female configuration.

2. Fixing device according to claim 1, **characterised in that** the lateral dimensions of the rear and front engagement members (2, 3) are less than those of the female configurations (14, 17) of the locking element (4) so as to permit a certain lateral clearance of the latter.

3. Fixing device according to claim 1 or 2, in which the rear engagement member (3) is forwardly prestressed by adjustable resilient means (5), **characterised in that** the adjustable resilient means comprise at least one helicoidal spring (5, 5') bearing on an eccentric (26) carried by an adjustment rod (25) permitting adjustment of the tension of said helicoidal spring (5) by rotation of the rod.

4. Fixing device according to claim 3, **characterised in that** the eccentric (26) is provided by a partial recess in the adjustment rod (25).

5. Fixing device according to any one of the preceding claims, **characterised in that** the body (1) of the automatic pedal is made of a non-metallic synthetic material.

6. Fixing device according to any one of the preceding claims, **characterised in that** the pedal is a reversible pedal comprising two engagement surfaces (10).

7. Locking element of a shoe on an automatic cycle pedal, constituting a single piece capable of being fixed below the shoe, of the type comprising a front end (12) and a rear end (11) adapted to cooperate respectively with a front engagement member (2) of the automatic cycle pedal to engage the front end (12) of the locking element (4) fixed below the shoe and a movable rear engagement member (3) of the automatic cycle pedal to engage the rear end (11) of said element, **characterised in that** the front and rear ends (12, 11) of said element are ends with a female configuration capable of being pinched between the front and rear male engagement members (2, 3) of an automatic pedal, the front female end (12) of said locking element having two front guide jaws (19) disposed on either side of the female configuration (17) and capable of guiding the front male engagement member (2) of the automatic pedal towards this female configuration.

8. Locking element according to claim 7, **characterised in that** the front female end (12) of said locking element (4) has a front recess capable of being engaged below the front male engagement member (2) of an automatic pedal.
